# EUROPEAN PATENT SPECIFICATION

(11) **EP 4 076 746 B1**
(45) Date of publication and mention of the grant of the patent: **23.08.2023**
(21) Application number: 20825268.4
(22) Date of filing: 17.12.2020
(51) Int. Cl.: B01J 41/07, B01J 39/05, B01J 47/014, B01J 47/02

(54) **PROCESS FOR RECOVERING AND RECYCLING ALKYL SULFONIC ACID IN THE PRODUCTION OF LIPIDS FROM BIOMASS DERIVING FROM GUAYULE PLANTS**
VERFAHREN ZUR GEWINNUNG UND RÜCKFÜHRUNG VON ALKYLSULFONSÄURE BEI DER HERSTELLUNG VON LIPIDEN AUS VON GUAYULEPFLANZEN STAMMENDER BIOMASSE
PROCÉDÉ DE RÉCUPÉRATION ET DE RECYCLAGE D'ACIDE ALKYLSULFONIQUE DANS LA PRODUCTION DE LIPIDES À PARTIR DE BIOMASSE DÉRIVÉE DE PLANTES DE GUAYULE

(30) Priority: 20.12.2019 IT 201900024991
(43) Date of publication of application: 26.10.2022
(73) Proprietor: Versalis S.p.A., 20097 San Donato Milanese (MI) (IT)
(72) Inventor: BATTISTEL, Ezio, 28100 Novara (IT); BALDASSARRE, Mario, 28100 Novara (IT)
(74) Representative: Casci, Tamara
(86) International application number: PCT/IB2020/062102
(87) International publication number: WO 2021/124194

(56) References cited:
- WO-A1-2010/069583
- WO-A1-2019/003097

## Description

The present invention relates to a process for recovering and recycling alkyl sulfonic acid in the production of lipids from biomass deriving from Guayule plants.

More specifically, the present invention relates to a process for recovering and recycling alkyl sulfonic acid, said alkyl sulfonic acid having from 1 to 6 carbon atoms, preferably from 1 to 3 carbon atoms, more preferably methanesulfonic acid (CH₃-SO₃H), in the production of lipids from biomass deriving from Guayule plants.

Natural rubber is a hydrocarbon polymer (cis-1,4-polyisoprene) present in hundreds of plant species in the form of an aqueous emulsion normally referred to as latex. The main source of natural rubber is *Hevea brasiliensis,* a tree native to the Amazon, and the South America remained the main source of the limited amounts of latex required throughout the nineteenth century. Currently, due to pests and diseases, American plantations have been almost completely abandoned and the production of natural rubber is almost entirely concentrated in Southeast Asia.

Several methods for producing synthetic rubbers were developed during the twentieth century in order to overcome the drawbacks of a production that was always exposed to diseases and pest attack, which culminated with the discovery of the Ziegler-Natta catalysts that allow the polymerization of isoprene with very high regio- and stereo-selectivity, obtaining a synthetic cis-1,4-polyisoprene that is practically indistinguishable from that of vegetable origin. Natural rubber, however, has not been completely supplanted because some of the properties thereof, mainly mechanical, are actually a consequence of its content of small amounts of lipids and associated proteins. Thus, 12 Mt (43%) of natural rubber is still included in the total rubbers production in 2013 (27.5 Mt).

Rubber production from *Hevea brasiliensis* however, features some technical and ethical problems. Indeed, it is always possible that the same diseases and pests that destroyed American plantations will also affect those in Southeast Asia. Furthermore, latex harvesting requires a large amount of labor and it is profitable only because this labor is paid with extremely low wages. For these reasons, alternative sources of natural rubber are being sought. Among them, guayule (*Parthenium argentatum*) is certainly one of the most promising.

The guayule (*Parthenium argentatum*) is a perennial shrub native to the semi-desert regions of the southwestern USA (especially Texas) and northern Mexico. This plant accumulates natural rubber, consisting predominantly of the cis-1,4-polyisoprene elastomer, in the form of latex (a milky suspension or dispersion in water) especially in the bark of the branches and stem. The natural rubber content can depend on various environmental, cultivation and conservation factors and is between 5% and 20% of the total weight of the dry plant.

The extraction of natural rubber from the Guayule plant, as well as other plants belonging to the genera Asteraceae, Euphorbiaceae, Campanulaceae, Labiatae and Moraceae such as, for example, *Euphorbia lathyris*, *Parthenium incanum*, *Chrysothamnus nauseosus*, *Pedilanthus macrocarpus, Cryptostegia grandiflora, Asclepias syriaca, Asclepias speciosa, Asclepias subulata, Solidago altissima, Solidago gramnifolia, Solidago rigida, Sonchus arvensis, Silphium spp., Cacalia atriplicifolia, Taraxacum kok-saghyz, Pycnanthemum incanum, Teucreum canadense, American bellflower* (for brevity's sake indicated with the term "guayule type"), represents an important alternative to the extraction of natural rubber from *Hevea brasiliensis*, especially in consideration of the greater resistance of these species to pathogens that attack *Hevea,* of the lower costs of importing the raw material of plant origin and by virtue of the lower content, in the rubbers extracted from these plants compared to that derived from *Hevea,* of numerous protein contaminants responsible for latex type I (or IgE mediated) allergies.

The production of natural rubber from guayule is, however, profitable only if all the other fractions that make up the plant are also enhanced: mainly the resin (present in amounts comparable to that of rubber) and the lignocellulosic fraction, as well as small amounts of essential oils and waxes.In particular, after extraction of the rubber and resin, widely described in the scientific and patent literature, the lignocellulosic residue (bagasse), comprising lignin and polysaccharides, must be submitted to the saccharification process which consists in a hydrolysis of the polysaccharides [which are thus transformed into 5-carbon sugars (C5) and 6-carbon atoms (C6) dissolved in the hydrolysate obtained] and leaves a solid residue including lignin. The sugars thus obtained can subsequently be used as a supply in processes for producing organic intermediates by fermentation, while the lignin can be exploited as a fuel or in other ways.

Among the saccharification processes known in the art, those which allow obtaining a hydrolysis of the hemicellulose as much complete as possible and a highest possible concentration of monomeric sugars, while minimizing the formation of oligomers and the degradation of sugars to furan compounds that may have effective inhibitors during the fermentation of the microorganisms of interest, are to be preferred. Among these processes, those using organic acids in the treatment of said lignocellulosic residue (bagasse), comprising lignin and polysaccharides, are particularly advantageous and, among the organic acids used, alkyl sulfonic acids and, more particularly, methanesulfonic acid (CH₃-SO₃) is particularly suitable, as it allowed obtaining a high conversion of the hemicellulosic component (i.e. a conversion greater than 95%) and, in particular, a high amount of sugars having 5 carbon atoms (C5) such as, for example, xylose, arabinose, and a low amount of byproducts such as, for example, furfural (F), hydroxy-methyl-furfural (HMF) (i.e., an amount lower than or equal to 3% of total sugars).

For example, the International patent application WO 2016/062753 in the name of the Applicant, relates to an integrated process for transforming and enhancing each part of the Guayule plant, comprising the following steps in sequence:
- separating the stem and branches from the leaves of said plant with a mechanical treatment;
- treating the leaves to produce waxes and essential oils, and a fraction comprising cellulose, hemicellulose and, to a lesser extent, salts, organic compounds and lignin;
- extracting a liquid phase from the stem and branches thus forming a first solid woody residue, referred to as bagasse;
- treating said first solid woody residue to form sugars, cellulose, hemicellulose and lignin.

Said first woody residue (bagasse) is submitted to saccharification in two steps. In particular, the first step is an acid hydrolysis with dilute acids including, for example, methanesulfonic acid (CH₃-SO₃H) which transforms the hemicellulose into 5-carbon sugars (C5) and forms a second solid woody residue containing cellulose, lignin, resins and rubber which is subsequently submitted to further enzymatic, chemical, or thermochemical hydrolysis, to make 6-carbon sugars (C6) and a solid residue that contains, mainly lignin, or lignin, residual rubber and resin, and cellulose. The aforesaid integrated process is said to be able to further enhance the Guayule plant by combining the production of latex, rubber, resin and bagasse with the production of fermentable sugars: said enhancement is particularly important in the case of biorefineries designed to produce organic intermediates other than ethanol, for example, to produce 1,3-butanediol which can be transformed, after the double catalytic dehydration thereof, into bio-butadiene.

The International patent application WO 2019/003097 in the name of the Applicant, relates to a process for producing lipids from biomass deriving from Guayule plants comprising:
- obtaining a hydrolysate comprising 5-carbon sugars (C5) from the biomass deriving from Guayule plants, said 5-carbon sugars (C5) being present in said hydrolysate in an amount higher than or equal to 80% by weight, preferably between 85% by weight and 99% by weight, with respect to the total weight of said hydrolysate;
- supplying said hydrolysate to a fermentation device with at least one oleaginous yeast obtaining a fermentation broth;
- at the end of the fermentation, submitting said fermentation broth to separation obtaining an aqueous suspension of oleaginous cellular biomass comprising lipids and an aqueous phase.

Said hydrolysate comprising 5-carbon sugars (C5) can be obtained by treating the biomass deriving from Guayule plants or bagasse with an aqueous solution of at least one organic acid having from 1 to 6 carbon atoms, preferably from 1 to 3 carbon atoms, more preferably methanesulfonic acid (CH₃-SO₃H), the pH of said aqueous solution being between 0.6 and 1.6, preferably between 0.9 and 1.3, as described, for example, in the international patent application WO 2015/087254 in the name of the Applicant. The aforesaid process is said to increase the range of products obtainable from the Guayule plant by combining the production of latex, rubber, resin and bagasse with also the production of lipids. Said lipids can be advantageously used in the production of biofuels such as, for example, biodiesel or "Green Diesel", which can be used as such, or mixed with other fuels for motor vehicles.

However, both in the international patent application WO 2015/087254, and in the international patent application WO 2019/003097, reported above, neither the recovery nor the recycling of the organic acid used, in particular of the methanesulfonic acid (CH₃-SO₃H) are specifically described.

In general, one of the most significant uses described in the known art of the methanesulfonic acid (CH₃-SO₃H), is the use as an acid electrolyte in electrodeposition processes, especially in those that require lead (Pb) and tin (Sn), as the lead (Pb) and tin (Sn) salts of said methanesulfonic acid (CH₃-SO₃H) has a high solubility in water of the respective salts with respect to that of the salts of other acids.

For example, the article by Gernon M. D. et al, "Environmental benefits of methanesulfonic acid: Comparative properties and advantages", "Green Chemistry"(1999), pages 127-140, describes an electrochemical method for recovering alkyl sulfonic acids, for example methanesulfonic acid (CH₃-SO₃H), from the salts thereof with heavy metals, especially for reasons of environmental safety of the wastewater deriving from electrodeposition processes. Said method requires dedicated equipment, i.e. an electrolytic cell divided into two parts by an anion exchange membrane and allows both the recovery of the alkyl sulfonic acid, in particular of the methanesulfonic acid (CH₃-SO₃H), and of the respective heavy metals of the salts thereof. The aforesaid process, while managing to obtain alkyl sulfonic acid, in particular methanesulfonic acid (CH₃-SO₃H), free, may have some disadvantages such as, for example, the development of oxygen, stoichiometric with respect to methanesulfonic acid (CH₃-SO₃H), at the anode, which requires the use of equipment that guarantees the safety of the system; the partial efficiency of use of the electric current per mole of free formed methanesulfonic acid (CH₃-SO₃H), which makes the process inefficient as regards the energy balance and the use of the electric current; the partial degradation of the methanesulfonic acid (CH₃-SO₃H) in the reaction conditions in the presence of electric current, which causes the loss of the material of interest; the progressive degradation of the selective anion exchange membrane, which separates the liquid phase of the two parts of the electrolytic cell and which involves the need for frequent replacement so as not to compromise the efficiency of the process.

It is also known that in order to separate the monomeric sugars from the acids in the mixture obtained from the pre-treatment of biomass, the technology known as "Simulated Moving Bed" (SMB) can be used as described, for example, in the mathematical modeling article by Springfield R. and others, "Development and modeling of a continuous ion exclusion process for the separation of acid and sugar', "Separation Science Technology" (2001), Vol.36(5), pages 911-930. The principle on which the aforesaid technology is based is the exclusion chromatography, in which a cation exchange resin is used to partially retain sugars but completely exclude acids, obtaining a gradual and partial separation of acids from sugars. Said principle has been extensively studied in literature, but an application thereof in the separation of the methanesulfonic acid (CH₃-SO₃H) from 5-carbon sugars (C5) or 6-carbon sugars (C6) is not known.

It should be noted, in fact, that the "Simulated Moving Bed" (SMB) technology allows the development of the process for separating monomeric sugars from the acids in the mixture obtained from the pre-treatment of the biomasses, on an industrial scale and continuously, but does not increase per se the efficiency of the separation of the sugars from said acids, in particular from sulfuric acid usually used, which can be obtained instead by means of standard discontinuous single column chromatography. This efficiency in fact depends on the interaction between the stationary phase (cation resin, density of the charged groups, type of polymeric matrix, porosity, etc.), the acid to be excluded and the sugars which must be partially retained.

In the article by Nanguneri S.R. and others, "Acid/Sugar Separation Using Ion Exclusion Resins: A Process Analysis and Design", "Separation Science and Technology" (1990), Vol.25, Issue 13-15, pages1829-1842, a theoretical and economic model of the process for separating the sulfuric acid from sugars is presented: however, the separation is only partial and the methanesulfonic acid (CH₃-SO₃H) is not used.

The article by Wooley R. and others, "A Nine-Zone Simulating Moving Bed for the Recovery of Glucose and Xylose from Biomass Hydrolyzate", "Industrial & Engineering Chemistry Research" (1998), Vol.37(9), pages 3699-3709, describes the process for the purification of 5-carbon sugars (C5), in particular xylose, and 6-carbon atoms (C6), in particular glucose, from sulfuric acid, usually used in the processes of biomass pre-treatment, using the aforesaid "Simulated Moving Bed" (SMB) technology, with a recovery of said sugars equal to 88% and a purity equal to 100%. However, the possibility of recycling the recovered sulfuric acid is neither described nor suggested.

The American patent US 5,968,362 describes a continuous method for removing heavy metals from a solution comprising sugar and acid, preferably sulfuric acid, comprising:
(a) hydrolysing a sample comprising heavy metals and cellulose and/or hemicellulose with a concentrated acid to make a partially digested mixture;
(b) diluting the partially digested mixture with water and heating for a time sufficient to substantially hydrolyse said cellulose and/or hemicellulose to make a sugar/acid solution comprising heavy metals;
(c) adding the sugar/acid solution comprising heavy metals to a "Simulated Moving Bed" (SMB) separation unit comprising a bed of anion exchange or exclusion chromatographic material, whereby the acid is adsorbed on the chromatographic material and the bed is washed with water, thus producing a series of first fractions comprising solutions of sugars and a subsequent series of fractions comprising acid;
(d) combining the solutions of sugars;
(e) treating the solutions of sugars with lime to neutralize any residual acids and heavy metals that may be present;
(f) combining and concentrating the fractions comprising acid; and
(g) repeating steps (a) - (f) at least once.

In the article by Lemaire J. and others, "Purification of pentoses from hemicellulosic hydrolysates with sulfuric acid recovery by using electrodialysis", "Separation and purification Technology" (2016), Elsevier, Vol. 166, pages 181-186, the 5-carbon sugars (C5) are separated from sulfuric acid by electrodialysis. The process is complex as the biomass hydrolysate must be extensively purified via ultrafiltration to remove all the organic molecules or macromolecules (proteins, nucleic acids, etc.) that significantly interfere with the yields by depositing on the electrodes, which must be kept as clean as possible. The purification of sugars is however completed with a passage on ion exchange resins. However, the purification of the acid is partial as it is not completely selective towards sugars.

From the foregoing, it can be deduced that in the known art the separation of a 5-carbon sugar (C5), in particular xylose, from alkyl sulfonic acids, in particular from methanesulfonic acid (CH ₃-SO₃H) by exclusion chromatography, both on a single discontinuous column and on a continuous "Simulated Moving Bed" (SMB) is described. The development of said separation, in fact, must take into account the chemical characteristics of the methanesulfonic acid (CH₃-SO₃H) which is a less strong acid than the sulfuric acid and, consequently, is less effectively excluded from cation resins as it contains a methyl group. In fact, this group imparts less polar properties to methanesulfonic acid (CH₃-SO₃H) compared to sulfuric acid, making it not only less likely to be excluded from the polar cation groups of the resin, but also more suitable for interacting with the non-polar polymeric matrix optionally present in the resin (for example, with the polystyrene matrix of many commercial cation resins).

Since, as mentioned above, alkyl sulfonic acids, in particular methanesulfonic acid (CH₃-SO₃H), are used in the production of lipids from biomass deriving from Guayule plants, in particular in the pre-treatment of said biomass for the production of hydrolysates comprising 5-carbon sugars (C5), the recovery and recycling thereof is of particular interest and it would allow both to reduce the environmental impact of the process and a significant saving from an economic point of view since methanesulfonic acid (CH₃-SO₃H) is expensive.

The Applicant therefore posed the problem of finding a process for recovering and recycling alkyl sulfonic acids, in particular methanesulfonic acid (CH₃-SO₃H), in the production of lipids from biomass deriving from Guayule plants.

The Applicant has now found a process for recovering and recycling alkyl sulfonic acid, more preferably methanesulfonic acid (CH₃-SO₃H), in the production of lipids from biomass deriving from Guayule plants, by using ammonium hydroxide in the regeneration of the weak anion exchange resin on which said alkyl sulfonic acid is adsorbed. The recovered alkyl sulfonic acid is recycled to the pre-treatment of said biomass for the production of hydrolysates comprising 5-carbon sugars (C5).

Therefore, the object of the present invention is a process for recovering and recycling alkyl sulfonic acid in the production of lipids from biomass deriving from Guayule plants comprising the following steps:
(a) obtaining a hydrolysate comprising 5-carbon sugars (C5) from the biomass deriving from Guayule plants, by treating said biomass with an aqueous solution of at least one alkyl sulfonic acid having from 1 to 6 carbon atoms, preferably from 1 to 3 carbon atoms, more preferably methanesulfonic acid (CH₃-SO₃H);
(b) contacting the hydrolysate obtained in step (a) with a weak anion exchange resin obtaining the adsorption of said at least one alkyl sulfonic acid in said weak anion exchange resin and an aqueous solution comprising 5-carbon sugars (C5);
(c) regenerating said weak anion exchange resin with an aqueous ammonium hydroxide solution obtaining an aqueous solution comprising the ammonium salt of said alkyl sulfonic acid and ammonium ions;
(d) subjecting the aqueous solution comprising the ammonium salt of said alkyl sulfonic acid and ammonium ions obtained in step (c) to vacuum evaporation obtaining a solution comprising the ammonium salt of said alkyl sulfonic acid and ammonium ions, said ammonium ions being present in an amount lower than or equal to 50%, preferably between 10% and 20%, with respect to the total amount of ammonium ions present in the aqueous solution obtained in step (c);
(e) contacting the solution containing the ammonium salt of said alkyl sulfonic acid and ammonium ions obtained in step (d) with a strong cation exchange resin obtaining a concentrated aqueous solution of said alkyl sulfonic acid;
(f) recycling the concentrated solution of said alkyl sulfonic acid obtained in said step (e) at the aforesaid step (a).

For the purpose of the present description and of the following claims, the definitions of the numerical intervals always comprise the extreme values unless otherwise specified.

For the purpose of the present description and of the following claims, the term "comprising" also includes the terms "which essentially consists of" or "which consists of".

For the purpose of the present description and of the following claims, the term "Guayule plant" generically means both the species *Parthenium argentatum* and the guayule-type plants of the species listed above.

For the purpose of the present description and of the following claims, the term "5-carbon sugars (C5)" means a pentose sugar, or more simply a pentose, which is a monosaccharide glucide composed of five carbon atoms having the chemical formula C₅H₁₀O₅. Similarly, for the purpose of the present description and of the following claims, the term "6-carbon sugars (C6)" means a hexose sugar, or more simply a hexose, which is a monosaccharide glucide composed of six carbon atoms having the chemical formula C₆H₁₂O₆.

For the purpose of the present description and of the following claims, the term "biomass deriving from Guayule plants" means any form (for example, the whole plant, parts of plants, including roots, branches and/or stems, leaves, any bark, plant fragments obtained by shredding, grinding, etc., briquettes and pellets obtained by compaction of plant fragments) in which the Guayule plant is used in order to obtain, by means of chemical and/or physical methods, latex, rubber, resin, bagasse, sugars, and other components present in the plant itself.

For the purpose of the present description and of the following claims, the term "bagasse" refers to the residual portion of plant material deriving from the extraction processes to which Guayule plants can be submitted. Bagasse can also include small amounts of non-plant material (for example, soil, sand, etc.) typically associated with the plant roots and derived from growing soils.

In accordance with a preferred embodiment of the present invention, said hydrolysate comprising 5-carbon sugars (C5) from biomass deriving from Guayule plants derives from the hydrolysis of the hemicellulose contained in Guayule plants, said 5-carbon sugars (C5) being present in said hydrolysate in an amount higher than or equal to 50%, preferably between 75% and 95%, with respect to the total amount of sugars present in said hydrolysate.

In accordance with a further preferred embodiment of the present invention, said hydrolysate comprising 5-carbon sugars (C5) from biomass deriving from Guayule plants derives from the hydrolysis of the hemicellulose contained in the bagasse deriving from the extraction processes to which said Guayule plants are submitted, said 5-carbon sugars (C5) being present in said hydrolysate in an amount higher than or equal to 50%, preferably between 75% and 95%, with respect to the total amount of sugars present in said hydrolysate.

Extraction processes to which Guayule plants can be subjected in order to obtain bagasse are known in the art. For the purpose of the present invention, said bagasse can be preferably obtained by means of the process described in the international patent application WO 2016/062753 in the name of the Applicant, reported above.

Preferably, for the purpose of the present invention, said hydrolysis can be carried out as described, in the aforesaid international patent application WO 2016/062753 in the name of the Applicant or in the aforesaid international patent application WO 2019/003097 in the name of the Applicant.

From the hydrolysis of the biomass deriving from Guayule plants or bagasse, a mixture is obtained comprising a solid phase (i.e. solid residue) and an aqueous phase (i.e. hydrolysate). Said mixture is submitted to filtration or centrifugation in order to obtain a solid phase (i.e. solid residue) comprising lignin and cellulose and an aqueous phase, i.e. hydrolysate comprising 5-carbon sugars (C5), said 5-carbon sugars ( C5) being present in said hydrolysate in an amount higher than or equal to 50%, preferably between 75% and 95%, with respect to the total amount of sugars present in said hydrolysate.

Said solid phase (i.e. solid residue) comprising lignin and cellulose can be used in an enzymatic hydrolysis process, in order to hydrolyse cellulose to 6-carbons sugars (C6), in particular glucose. The enzymatic hydrolysis process can be carried out according to techniques known in the art as described, for example, in the American patents US 5,628,830, US 5,916,780 and US 6,090,595, using commercial enzymes such as, for example, Celluclast 1.5L (Novozymes), Econase CE (Rohm Enzymes), Spezyme (Genecor), Novozym 188 (Novozymes), used singly or mixed together. From the enzymatic hydrolysis of said solid phase, a further solid phase is obtained comprising lignin and a further aqueous phase (i.e. hydrolysate) comprising 6-carbons sugars (C6), in particular glucose which derives from the hydrolysis of cellulose. Said further solid phase and said further aqueous phase (i.e. hydrolysate) can be separated by techniques known in the art such as, for example, filtration, centrifugation. Preferably, said phases are separated by filtration. The 6-carbons sugars (C6), in particular glucose, can be subsequently used in fermentation processes for producing organic intermediates or ethanol, while lignin can be used as a fuel.

The amounts of sugars obtained after hydrolysis can be determined by techniques known in the art such as, for example, High Performance Liquid Chromatography (HPLC), or ion exchange chromatography.

Examples of weak anion exchange resins which can be advantageously used for the purpose of the present invention are moderately basic resins having a polymeric structure to which functional groups such as tertiary amino groups are attached.

In accordance with a preferred embodiment of the present invention, said weak anion exchange resin can be selected from resins formed by a polystyrene/divinylbenzene backbone to which functional groups such as tertiary amino groups are attached.

Weak anion exchange resins which can be advantageously used for the purpose of the present invention and which are currently commercially available are the products Dowex^{™} Monosphere^{™} 77 from DowDuPont, XA 3031 from Novasep, Amberlyst^{™} A21 from DowDow Chemical.

Step (b) of contacting the hydrolysate obtained in step (a) with a weak anion exchange resin, can be carried out in accordance with any method known in the art for contacting liquids with an ion exchange resin. For example, the weak anion exchange resin can be packed into a column and the hydrolysate can be supplied from the top of the column and let flow downwards through said resin.

It should be noted that, as regards the flow rate in said step (b), there are no particular constraints. In this regard, it should be noted that the hydrolysate can be supplied to the column containing the weak anion exchange resin at a flow rate which depends on the dimensions (diameter, height) of the column containing the weak anion exchange resin. By way of non-limiting example of the present invention, in said step (b) the hydrolysate can be supplied to a column containing the weak anion exchange resin at a flow rate between 100 ml/h and 2000 ml/h, preferably between 150 ml/h and 1000 ml/h.

In accordance with a preferred embodiment of the present invention, in said step (b) the hydrolysate can be supplied to a column containing the weak anion exchange resin at a temperature between 10°C and 60°C, preferably between 20°C and 40°C.

It should be noted that, as regards the pressure in said step (b), there are no particular constraints. In this regard, it should be noted that the hydrolysate can be supplied to the column containing the weak anion exchange resin at a pressure which must only be sufficient to overcome the pressure drops of the resin packed in said column.

In accordance with a preferred embodiment of the present invention, in said step (c) the aqueous ammonium hydroxide solution can have an ammonium hydroxide concentration between 1% by weight and 10% by weight, preferably between 2% by weight and 8% by weight, with respect to the total weight of the solution.

It should be noted that, as regards the flow rate in said step (c), there are no particular constraints. In this regard, it should be noted that the aqueous ammonium hydroxide solution can be supplied to the column containing the weak anion exchange resin at a flow rate which depends on the dimensions (diameter, height) of the column containing the weak anion exchange resin. By way of non-limiting example of the present invention, in said step (b) the aqueous ammonium hydroxide solution can be supplied to a column containing the weak anion exchange resin at a flow rate between 100 ml/h and 2000 ml/h, preferably between 150 ml/h and 1000 ml/h.

In accordance with a preferred embodiment of the present invention, in said step (b) the aqueous ammonium hydroxide solution can be supplied to a column containing the weak anion exchange resin at a temperature between 10°C and 60°C, preferably between 20°C and 40°C.

It should be noted that, as regards the pressure in said step (c), there are no particular constraints. In this regard, it should be noted that the aqueous ammonium hydroxide solution can be supplied to the column containing the weak anion exchange resin at a pressure which must only be sufficient to overcome the pressure drops of the resin packed in said column.

In accordance with a preferred embodiment of the present invention, in said step (d), vacuum evaporation can be carried out at a pressure between 30 mbars and 100 mbars, preferably between 40 mbars and 80 mbars.

In accordance with a preferred embodiment of the present invention, in said step (d) vacuum evaporation can be carried out at a temperature between 10°C and 60°C, preferably between 20°C and 50°C.

In order to completely recover the ammonia, the vapours deriving from evaporation are condensed by a conventional cooling system using running water at 5°C - 10°C and, subsequently, in series, by means of other standard vapour condensation systems maintained at -5°C and -20°C: more details can be found in the examples below.

In accordance with a particularly preferred embodiment of the present invention, said strong cation exchange resin can be selected from resins formed by a polystyrene/divinylbenzene backbone to which functional groups such as sulfonate groups are attached.

Strong cation exchange resins which can be advantageously used for the purpose of the present invention and which are currently commercially available are the products Dowex^{™} Monosphere^{™} 88, Amberlite^{™} IRC200 Na from DowDuPont.

Step (e) of contacting the solution containing the ammonium salt of said alkyl sulfonic acid obtained in step (d) with a strong cation exchange resin, can be carried out according to any method known in the art for contacting liquids with an ion exchange resin. For example, the strong cation exchange resin can be packed into a column and the solution containing the ammonium salt of said alkyl sulfonic acid can be supplied from the top of the column and let flow downwards through said resin.

It should be noted that, as regards the flow rate in said step (e), there are no particular constraints. In this regard, it should be noted that the solution containing the ammonium salt of said alkyl sulfonic acid can be supplied to the column containing the strong cation exchange resin at a flow rate which depends on the dimensions (diameter, height) of the column containing the strong cation exchange resin. By way of non-limiting example of the present invention, in said step (e) the solution containing the ammonium salt of said alkyl sulfonic acid can be supplied to a column containing the strong cation exchange resin at a flow rate between 100 ml/h and 2000 ml/h, preferably between 150 ml/h and 1000 ml/h.

In accordance with a preferred embodiment of the present invention, in said step (e) the solution containing the ammonium salt of said alkyl sulfonic acid can be supplied to a column containing the strong cation exchange resin at a temperature between 10°C and 60°C, preferably between 20°C and 40°C.

It should be noted that, as regards the pressure in said step (e), there are no particular constraints. In this regard, it should be noted that the solution containing the ammonium salt of said alkyl sulfonic acid can be supplied to the column containing the strong cation exchange resin at a pressure that must only be sufficient to overcome the pressure drops of the resin packed in said column.

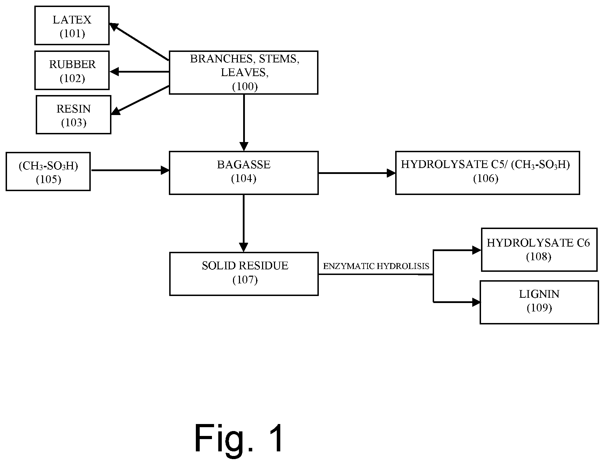

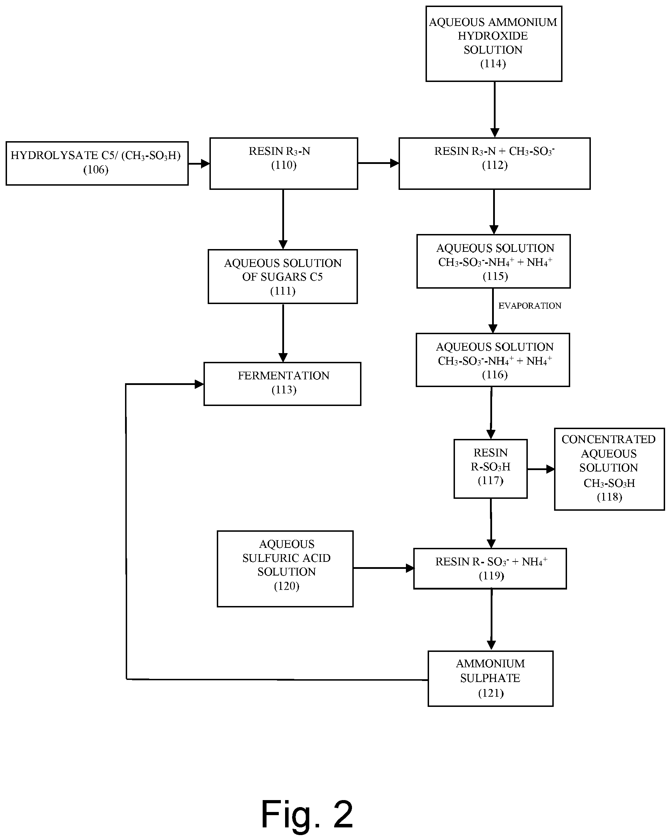

The present invention will now be illustrated in greater detail through an embodiment with reference to Figure 1 and Figure 2 reported below.

Figure 1 schematises an embodiment of step (a) of the process object of the present invention. For this purpose, starting from the whole Guayule plant, including branches, stems and leaves (100), after extraction of the fraction of the rubber in the form of latex (101), of the resin (103) and after further extraction of the residual rubber (102), by means of processes known in the art as described, for example, in the international patent application WO 2016/062753 in the name of the Applicant, reported above, a bagasse (104) is obtained. Bagasse (104) undergoes a pre-treatment with methanesulfonic acid (CH₃-SO₃H) (105) obtaining a hydrolysate comprising 5-carbon sugars (C5) and methanesulfonic acid (CH₃-SO₃H) (106) and a solid residue (107). The solid residue (107) is submitted to enzymatic hydrolysis in order to obtain a hydrolysate containing 6-carbon sugars (C6) (108), mainly glucose from cellulose, and a further solid residue containing mainly lignin (109).

Figure 2 schematises an embodiment of the steps (b) - (f) of the process object of the present invention. For this purpose, the hydrolysate comprising 5-carbon sugars (C5) and methanesulfonic acid (CH₃-SO₃H) (106) obtained as described in Figure 1, is contacted with a weak anion exchange resin (110) (for example, a resin containing a tertiary amino functional group R ₃-N) obtaining the adsorption of the methanesulfonic acid (CH₃-SO₃H) in said weak anion exchange resin (112) and an aqueous solution comprising 5-carbon sugars (C5) that are purified and desalinated (111) which are recovered and can be directly used in the fermentation (113) in the presence of microorganisms to make biochemicals, microbial oils, lipids, biofuels (not represented in Figure 2). The weak anion exchange resin in which the methanesulfonic acid (CH₃-SO₃H) (112) is adsorbed is subjected to regeneration by supplying an ammonium hydroxide aqueous solution (114) obtaining a regenerated weak anion exchange resin (not represented in Figure 2) which can be reused and an aqueous solution comprising the ammonium salt of the methanesulfonic acid (CH₃-SO₃⁻-NH₄⁺) and ammonium ions (NH₄⁺) (115). Said aqueous solution comprising the ammonium salt of the methanesulfonic acid (CH₃-SO₃⁻-NH₄⁺) and ammonium ions (NH₄⁺) (115) is subjected to vacuum evaporation obtaining an aqueous solution comprising the ammonium salt of the methanesulfonic acid (CH₃-SO₃⁻-NH₄⁺) and ammonium ions (NH₄⁺) (116) in smaller amounts and the recovery of ammonium ions (NH₄⁺) in the form of gaseous ammonia (not represented in Figure 2), which can be reused to regenerate the weak anion exchange resin (not represented in Figure 2). The aqueous solution comprising the ammonium salt of the methanesulfonic acid (CH₃-SO₃⁻-NH₄⁺) and ammonium ions (NH₄⁺) (116) is contacted with a strong cation exchange resin (117) (for example, a resin containing a sulfonate functional group R-SO₃H) obtaining a concentrated aqueous solution of methanesulfonic acid (CH₃-SO₃H) (118) which is recycled to the treatment of the bagasse (not represented in Figure 2) while the ammonium ions (NH₄⁺) are completely retained by the strong cation exchange resin (119). The strong cation exchange resin (119) in which the ammonium ions (NH₄⁺) are adsorbed is subjected to regeneration by supplying an aqueous solution of sulfuric acid (120) obtaining a regenerated strong cation exchange resin (not represented in Figure 2) which can be reused and an aqueous solution comprising ammonium sulphate (121) which is sent to fermentation (113).

In order to better understand the present invention and to put it into practice, some illustrative and non-limiting examples thereof are reported below.

### EXAMPLE 1 (comparative)

### Separation of 5-carbon (C5) and 6-carbon (C6) sugars from methanesulfonic acid (CH₃-SO₃H) through the passage over ion exchange resins

10 kg of guayule bagasse (*Parthenium argentatum* ) previously ground (particle diameter < 2 mm) were loaded into a 100 liter steel reactor containing 90 kg of an aqueous solution of methanesulfonic acid (CH₃-SO₃H) (Aldrich), at pH 0.9: the reaction mixture thus obtained was kept under vigorous stirring (300 rpm), until reaching the temperature of 140°C, over a period of 20 minutes. Subsequently, the solid residue comprising lignin and cellulose was separated from the hydrolysate comprising 5-carbon sugars (C5) and 6-carbon sugars (C6), by filtration.

The solid residue remained in the reactor was washed with water (50 kg x 3 times) before being recovered, while an aliquot of said hydrolysate comprising the following compounds: methanesulfonic acid (CH₃-SO₃H) (244 g), glucose (73 g), xylose (272 g), arabinose (151 g), was supplied to a treatment plant with ion exchange resins.

The plant consisted of two transparent polyvinyl chloride columns (PVC-U - GF Piping System) having the following dimensions: diameter = 151 mm, height = 1200 mm. Said two columns were connected in series, filled with ion exchange resins: the first column was filled with a strong cation resin (Dowex^{™} Monosphere^{™} 88 - Dow Chemical), while the second column was filled with a weak anion resin (Dowex^{™} Monosphere^{™} 77 - Dow Chemical).

The aforesaid treatment step with ion exchange resins was carried out at ambient temperature (25°C), while the flow rate was equal to 25 l/h using a metering pump (diaphragm metering pump with Delta ^{®} 4 - ProMinent solenoid) and was carried out until the total recovery of sugars. The ratio (TR) between the volume of sample supplied and the volume of the resin contained in the columns was equal to 2.

At the end of the aforesaid treatment, a solution was obtained containing: glucose (71 g), xylose (266 g) and arabinose (149 g), corresponding to an overall recovery of the sugars equal to 98% of the sugars contained in the starting hydrolysate. Methanesulfonic acid (CH₃-SO₃H) was not detected at the exit of the column, because it was completely retained by the weak anion exchange resin.

The sugar content was determined by ion exchange chromatography (HPAE-PAD), using a Dionex chromatograph, equipped with a Carbopac PA 100 column, with a sodium hydroxide gradient and sodium acetate as counter-ion.

The content of methanesulfonic acid (CH₃-SO₃H) was determined by "High Performance Liquid Chromatography" (HPLC), using a Waters 2690 Alliance "module system" chromatograph equipped with binary pump, degasser, autosampler and thermostatted column compartment. The column used is Phenomenex Rezex ROA-Organic Acid H ⁺ having dimensions 300 x 7.8 mm, at 45 °C, in isocratic with 0.005 N aqueous solution of methanesulfonic acid (CH₃-SO₃H) is at 0.6 ml/min flow rate. Two detectors were used: a UV/Vis Dual Absorbance Detector (DAD) Waters 2487 detector and a Refractive Index Detector (RID) Waters 2410 detector.

### EXAMPLE 2 (comparative)

### Separation of 5-carbon sugars (C5) and 6-carbon atoms (C6) from methanesulfonic acid (CH₃-SO₃H) by strong cation exchange resin (exclusion chromatography)

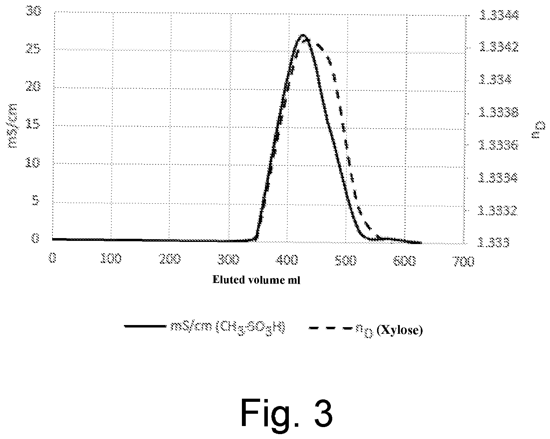

For this purpose, an aqueous solution (50 ml) of the following pure compounds was prepared: xylose (Carlo Erba) (15 g/l) and methanesulfonic acid (CH₃-SO₃H) (Aldrich) (12 g/l) and was loaded onto a column containing a strong cation exchange resin (80 cm x 3.4 cm) Dowex^{™} Monosphere 88, thermostatted at 50°C and eluted with water at a flow rate equal to 300 ml/h using a metering pump (FMI, USA; Model QV-200), for 90 minutes: the ratio (TR) between the supplied volume of the sample and the volume of the resin contained in the column was equal to 0.07. The elution of the methanesulfonic acid (CH₃-SO₃H) was followed by measuring the conductivity (mS/cm), while the one of xylose by measuring the refractive index (nD) using an Atago Refractometer RX7000 refractometerα . The methanesulfonic acid (CH₃-SO₃H) was eluted first, at the excluded volume of the column, as it was not retained (excluded) by the resin while the xylose was slightly retarded compared to the methanesulfonic acid (CH₃-SO₃H), as shown in Figure 3 where the ordinate shows the conductivity expressed in mS/cm (on the left) measured by the XS Instrument-Cond70 conductivity meter with automatic temperature correction, and the refractive index expressed in nD (on the right) and the abscissa shows the elution volume in ml.

At the end of the elution profile of the methanesulfonic acid (CH₃-SO₃H), integrating the curves of Figure 3, it was calculated that the solution obtained at the end of the elution contained 99% by weight of the total methanesulfonic acid (CH₃-SO₃H) supplied and 80% by weight of the total xylose supplied. Although the TR (ratio between the volume of the sample and the volume of the resin) is clearly lower than that of Example 1, i.e. the volume of the resin is significantly higher than the volume of the sample, the results indicate that the use of exclusion chromatography does not allow obtaining an efficient separation between xylose and methanesulfonic acid (CH₃-SO₃H).

### EXAMPLE 3 (invention)

### Recovery of the methanesulfonic acid (CH₃-SO₃H) with ammonium hydroxide

The methanesulfonic acid (CH₃-SO₃H) adsorbed in the column containing a weak anion exchange resin as described in Example 1, was eluted by using an aqueous ammonium hydroxide solution (NH₄⁺OH⁻) (Aldrich) at 5% at a flow rate equal to 24 l/h using a metering pump (diaphragm metering pump with Delta^{®} 4 - ProMinent solenoid), at ambient temperature (25 °C), for 180 minutes. A solution containing ammonium salt of the methanesulfonic acid (CH₃-SO₃⁻-NH₄⁺) in an amount corresponding to the recovery of 95% by weight of the amount of methanesulfonic acid (CH₃-SO₃H) (232 g) used in Example 1 and ammonium ions (NH₄⁺) (359 g) (pH 10.6) was obtained at the exit of the column. The pH was measured with a PR-15A (Sartorius) pHmeter previously calibrated at a temperature equal to 20°C. The ammonium ions content was measured with a pH Meter 780 (Mettler Toledo) equipped with a selective electrode for ammonia (NH ₃).

### EXAMPLE 4 (comparative)

### Recovery of the methanesulfonic acid (CH₃-SO₃H) with sodium hydroxide

The methanesulfonic acid (CH₃-SO₃H) adsorbed in the column containing a weak anion exchange resin as described in Example 1, was eluted by using an aqueous sodium hydroxide solution (Na⁺OH⁻) (Aldrich) at 5% at a flow rate equal to 24 l/h using a metering pump (diaphragm metering pump with Delta^{®} 4 - ProMinent solenoid), at ambient temperature (25°C), for 180 minutes. A solution containing sodium salt of the methanesulfonic acid (CH₃-SO₃⁻-Na⁺) in an amount corresponding to the recovery of 89.7% by weight of the amount of the methanesulfonic acid (CH₃-SO₃H) (219 g) used in Example 1 and sodium hydroxide (701 g) (pH 10.6) which could not be removed either by evaporation under vacuum or by selective precipitation was obtained at the end of the column.

### EXAMPLE 5 (invention)

### Recovery of the free methanesulfonic acid (CH₃-SO₃H) and recycle of ammonium (NH₄⁺) as ammonium sulfate

The solution containing the ammonium salt of the methanesulfonic acid (CH₃-SO₃⁻-NH₄⁺) and ammonium ions (NH₄⁺) in excess obtained as described in Example 3, was submitted to evaporation, under vacuum, in Rotavapor^{®} R-100 (Buchi), 40°C, 70 mBar. The vapours were condensed by a conventional cooling system using running water at 5°C - 10°C and subsequently by means of an F25-Me (Julabo) circulation thermostat at -20°C, in order to completely recover the ammonia.

By the time the ammonium salt of the methanesulfonic acid (CH₃-SO₃⁻-NH₄⁺) began to precipitate, evaporation was interrupted obtaining a final solution containing 227 g of methanesulfonic acid (CH₃-SO₃H) corresponding to the recovery of 93% by weight of the amount of methanesulfonic acid (CH₃-SO₃H) used in Example 1 and ammonium ions (NH₄⁺) (43 g) which correspond to 12% with respect the total amount of ammonium ions (NH₄⁺) present in the starting solution (Example 3). The acidic pH value (pH 6) indicated that most of the ammonium ions (NH₄⁺) in excess had been evaporated in the form of ammonia.

The final solution obtained was diluted 3 times with distilled water (990 ml) and loaded onto a column containing a strong cation exchange resin (110 cm x 5 cm) Dowex^{™} Monosphere 88. The ratio (TR) between the supplied volume of the sample and the volume of the resin contained in the column was equal to 0.46, eluted with water at a flow rate of 600 ml/h using a metering pump (FMI, USA; Model QV-200), at ambient temperature (25°C), for 300 minutes. At the end of the elution, a solution containing 206 g of methanesulfonic acid (CH₃-SO₃H) which correspond to 84% by weight of the methanesulfonic acid (CH₃-SO₃H) in Example 1 was obtained. The presence of ammonium ions (NH₄⁺), which remained completely absorbed in the column, was not detected. In this way, a concentrated solution of free methanesulfonic acid (CH₃-SO₃H) (pH 0.7) which can be used, after dilution with water, at pH 0.9, directly in the pre-treatment of guayule bagasse, was obtained.

The column containing a strong cation exchange resin was used until the acid equivalents were exhausted (saturation of the ionic sites). Subsequently, said column containing a strong cation exchange resin was regenerated with a 2% sulfuric acid (Aldrich) aqueous solution obtaining an ammonium sulphate solution which allowed the quantitative recovery of ammonium ions (NH₄⁺) remained. Ammonium sulphate can be directly used in fermentations.

## Claims

1. A process for recovering and recycling alkyl sulfonic acid in the production of lipids from biomass deriving from Guayule plants comprising the following steps:
(a) obtaining a hydrolysate comprising 5-carbon sugars (C5) from the biomass deriving from Guayule plants, by treating said biomass with an aqueous solution of at least one alkyl sulfonic acid having from 1 to 6 carbon atoms, preferably from 1 to 3 carbon atoms, more preferably methanesulfonic acid (CH₃-SO₃H);
(b) contacting the hydrolysate obtained in step (a) with a weak anion exchange resin obtaining the adsorption of said at least one alkyl sulfonic acid in said weak anion exchange resin and an aqueous solution comprising 5-carbon sugars (C5);
(c) regenerating said weak anion exchange resin with an aqueous ammonium hydroxide solution obtaining an aqueous solution comprising the ammonium salt of said alkyl sulfonic acid and ammonium ions;
(d) subjecting the aqueous solution comprising the ammonium salt of said alkyl sulfonic acid and ammonium ions obtained in step (c) to vacuum evaporation obtaining a solution comprising the ammonium salt of said alkyl sulfonic acid and ammonium ions, said ammonium ions being present in an amount lower than or equal to 50%, preferably between 10% and 20%, with respect to the total amount of ammonium ions present in the aqueous solution obtained in step (c);
(e) contacting the solution containing the ammonium salt of said alkyl sulfonic acid and ammonium ions obtained in step (d) with a strong cation exchange resin obtaining a concentrated aqueous solution of said alkyl sulfonic acid;
(f) recycling the concentrated solution of said alkyl sulfonic acid obtained at said step (e) at the aforesaid step (a).

2. The process for recovering and recycling alkyl sulfonic acid in the production of lipids from biomass deriving from Guayule plants according to claim 1, wherein said hydrolysate comprising 5-carbon sugars (C5) from biomass deriving from Guayule plants derives from the hydrolysis of hemicellulose contained in Guayule plants, said 5-carbon sugars (C5) being present in said hydrolysate in an amount higher than or equal to 50%, preferably between 75% and 95%, with respect to the total amount of sugars present in said hydrolysate.

3. The process for recovering and recycling alkyl sulfonic acid in the production of lipids from biomass deriving from Guayule plants according to claim 1, wherein said hydrolysate comprising 5-carbon sugars (C5) from biomass deriving from Guayule plants derives from the hydrolysis of hemicellulose contained in the bagasse deriving from extraction processes undergone by said Guayule plants, said 5-carbon sugars (C5) being present in said hydrolysate in an amount higher than or equal to 50%, preferably between 75% and 95%, with respect to the total amount of sugars present in said hydrolysate.

4. The process for recovering and recycling alkyl sulfonic acid in the production of lipids from biomass deriving from Guayule plants according to any one of the preceding claims, wherein said weak anion exchange resin is selected from resins formed by a polystyrene/divinylbenzene backbone to which functional groups such as tertiary amino groups are attached.

5. The process for recovering and recycling alkyl sulfonic acid in the production of lipids from biomass deriving from Guayule plants according to any one of the preceding claims, wherein in said step (b) the hydrolysate is supplied to a column containing weak anion exchange resin at a temperature between 10°C and 60°C, preferably between 20°C and 40°C.

6. The process for recovering and recycling alkyl sulfonic acid in the production of lipids from biomass deriving from Guayule plants according to any one of the preceding claims, wherein in said step (c) the aqueous ammonium hydroxide solution has an ammonium hydroxide concentration between 1% by weight and 10% by weight, preferably between 2% by weight and 8% by weight, with respect to the total amount of the solution.

7. The process for recovering and recycling alkyl sulfonic acid in the production of lipids from biomass deriving from Guayule plants according to any one of the preceding claims, wherein in said step (c) the aqueous ammonium hydroxide solution is supplied to a column containing weak anion exchange resin at a temperature between 10°C and 60°C, preferably between 20°C and 40°C.

8. The process for recovering and recycling alkyl sulfonic acid in the production of lipids from biomass deriving from Guayule plants according to any one of the preceding claims, wherein in said step (d) the vacuum evaporation is carried out:
- at a pressure between 30 mbars and 100 mbars, preferably between 40 mbars and 80 mbars; and/or
- at a temperature between 10°C and 60°C, preferably between 20°C and 50°C.

9. The process for recovering and recycling alkyl sulfonic acid in the production of lipids from biomass deriving from Guayule plants according to any one of the preceding claims, wherein said strong cation exchange resin is selected from resins formed by a polystyrene/divinylbenzene backbone to which functional groups such as sulfonate groups are attached.

10. The process for recovering and recycling alkyl sulfonic acid in the production of lipids from biomass deriving from Guayule plants according to any one of the preceding claims, wherein in said step (e) the solution containing the ammonium salt of said alkyl sulfonic acid is supplied to a column containing the strong cation exchange resin at a temperature between 10°C and 60°C, preferably between 20°C and 40°C.

## Patentansprüche

1. Verfahren zur Rückgewinnung und Wiederverwendung von Alkylsulfonsäure bei der Herstellung von Lipiden aus Biomasse, die von Guayule-Pflanzen abgeleitet ist, das die folgenden Schritte umfasst:
(a) Gewinnung eines Hydrolysats mit 5-Kohlenstoff-Zuckern (C5) aus der Biomasse Abgeleitet aus Guayule-Pflanzen durch Behandlung der Biomasse mit einer wässrigen Lösung von mindestens einer Alkylsulfonsäure mit 1 bis 6 Kohlenstoffatomen, vorzugsweise 1 bis 3 Kohlenstoffatomen, besonders bevorzugt Methansulfonsäure (CH₃-SO₃H);
(b) Inkontaktbringen des in Schritt (a) erhaltenen Hydrolysats mit einem schwachen Anionenaustauscherharz, wodurch die Adsorption der mindestens einen Alkylsulfonsäure in dem schwachen Anionenaustauscherharz und eine wässrige Lösung mit 5-Kohlenstoff-Zuckern (C5) erhalten werden;
(c) Regenerieren des schwachen Anionenaustauscherharzes mit einer wässrigen Ammoniumhydroxidlösung unter Erhalt einer wässrigen Lösung, die das Ammoniumsalz der Alkylsulfonsäure und Ammoniumionen enthält;
(d) Unterwerfen der in Schritt (c) erhaltenen wässrigen Lösung, die das Ammoniumsalz der Alkylsulfonsäure und Ammoniumionen, die in Schritt (c) erhalten wurden, einer Vakuumverdampfung, wobei eine Lösung erhalten wird, die das Ammoniumsalz der Alkylsulfonsäure und Ammoniumionen enthält, wobei die Ammoniumionen in einer Menge kleiner oder gleich 50%, vorzugsweise zwischen 10% und 20%, bezogen auf die Gesamtmenge an Ammoniumionen in der in Schritt (c) erhaltenen wässrigen Lösung vorhanden sind;
(e) Inkontaktbringen der in Schritt (d) erhaltenen Lösung, die das Ammoniumsalz der Alkylsulfonsäure und Ammoniumionen enthält, mit einem starken Kationenaustauscherharz, wodurch eine konzentrierte wässrige Lösung der Alkylsulfonsäure erhalten wird;
(f) Rezyklieren der konzentrierten Lösung der in Schritt (e) erhaltenen Alkylsulfonsäure in den vorgenannten Schritt (a).

2. Verfahren zur Rückgewinnung und Wiederverwendung von Alkylsulfonsäure bei der Herstellung von Lipiden aus Biomasse, die von Guayule-Pflanzen abgeleitet ist, nach Anspruch 1, wobei das Hydrolysat, das 5-Kohlenstoff-Zucker (C5) aus Biomasse, die von Guayule-Pflanzen stammt, enthält, aus der Hydrolyse von Hemicellulose stammt, die in Guayule-Pflanzen enthalten ist, wobei die 5-Kohlenstoff-Zucker (C5) in dem Hydrolysat in einer Menge vorhanden sind, die höher ist als oder gleich 50%, vorzugsweise zwischen 75% und 95%, bezogen auf die Gesamtmenge der in diesem Hydrolysat vorhandenen Zucker.

3. Verfahren zur Rückgewinnung und Wiederverwendung von Alkylsulfonsäure bei der Herstellung von Lipiden aus Biomasse, die von Guayule-Pflanzen abgeleitet ist, nach Anspruch 1, **dadurch gekennzeichnet, dass** das Hydrolysat, das 5-Kohlenstoff-Zucker (C5) aus Biomasse, die von Guayule-Pflanzen stammt, enthält, aus der Hydrolyse von Hemicellulose stammt, die in der Bagasse enthalten ist, die aus Extraktionsprozessen stammt, denen die Guayule-Pflanzen unterzogen wurden, wobei die 5-Kohlenstoff-Zucker (C5) in dem Hydrolysat in einer Menge von mehr als oder gleich 50%, vorzugsweise zwischen 75% und 95%, bezogen auf die Gesamtmenge der in dem Hydrolysat vorhandenen Zucker, vorhanden ist.

4. Verfahren zur Rückgewinnung und Verwertung von Alkylsulfonsäure bei der Herstellung von Lipiden aus Biomasse von Guayule-Pflanzen nach einem der vorangehenden Ansprüche, wobei das schwache Anionenaustauscherharz ausgewählt ist aus Harzen mit einem Polystyrol/Divnylbenzen-Grundgerüst, an das funktionelle Gruppen wie tertiäre Aminogruppen gebunden sind.

5. Verfahren zur Rückgewinnung und Wiederverwendung von Alkylsulfonsäure bei der Herstellung von Lipiden aus Biomasse von Guayule-Pflanzen nach einem der vorangehenden Ansprüche, wobei in dem Schritt (b) das Hydrolysat einer Säule zugeführt wird, die ein schwaches Anionenaustauscherharz enthält, bei einer Temperatur zwischen 10°C und 60°C, vorzugsweise zwischen 20°C und 40°C.

6. Verfahren zur Rückgewinnung und Wiederverwendung von Alkylsulfonsäure bei der Herstellung von Lipiden aus Biomasse von Guayule-Pflanzen nach einem der vorangehenden Ansprüche, wobei in dem Schritt (c) die wässrige
Ammoniumhydroxidlösung eine Ammoniumhydroxidkonzentration zwischen 1 Gew.-% und 10 Gew.-%, vorzugsweise zwischen 2 Gew.-% und 8 Gew.-%, bezogen auf die Gesamtmenge der Lösung, aufweist.

7. Verfahren zur Rückgewinnung und Wiederverwendung von Alkylsulfonsäure bei der Herstellung von Lipiden aus Biomasse von Guayule-Pflanzen nach einem der vorangehenden Ansprüche, wobei in Schritt (c) die
wässrige Ammoniumhydroxidlösung bei einer Temperatur zwischen 10°C und 60°C, vorzugsweise zwischen 20°C und 40°C, einer Säule zugeführt wird, die ein schwaches Anionenaustauscherharz enthält.

8. Verfahren zur Rückgewinnung und Wiederverwendung von Alkylsulfonsäure bei der Herstellung von Lipiden aus Biomasse von Guayule-Pflanzen nach einem der vorangehenden Ansprüche, wobei im Schritt (d) die Vakuumverdampfung durchgeführt wird:
- bei einem Druck zwischen 30 mbar und 100 mbar, vorzugsweise zwischen 40 mbar und 80 mbar;
- und/oder bei einer Temperatur zwischen 10°C und 60°C, vorzugsweise zwischen 20°C und 50°C.

9. Verfahren zur Rückgewinnung und Wiederverwendung von Alkylsulfonsäure bei der Herstellung von Lipiden aus Biomasse von Guayule-Pflanzen nach einem der vorangehenden Ansprüche, wobei das starke Kationenaustauscherharz aus Harzen ausgewählt ist, die aus einem Polystyrol/Divinylbcnzen-Grundgerüst bestehen, an das funktionelle Gruppen wie Sulfonatgruppen gebunden sind.

10. Verfahren zur Rückgewinnung und Wiederverwendung von Alkylsulfonsäure bei der Herstellung von Lipiden aus Biomasse von Guayule-Pflanzen nach einem der vorangehenden Ansprüche, wobei in dem Schritt (e) die Lösung, die das Ammoniumsalz der Alkylsulfonsäure enthält, einer Säule zugeführt wird, die das starke Kationenaustauscherharz enthält, bei einer Temperatur zwischen 10°C und 60°C, vorzugsweise zwischen 20°C und 40°C.

## Revendications

1. Procédé pour la récupération et le recyclage d'acide alkylsulfonique dans la production de lipides à partir de biomasse issue de plantes de guayule, comprenant les étapes suivantes consistant à:
obtenir un hydrolysat comprenant des sucres à 5 atomes de carbone (C5) à partir de la biomasse issue de plantes de guayule, par traitement de ladite biomasse par une solution aqueuse d'au moins un acide alkylsulfonique ayant de 1 à 6 atomes de carbone, de préférence de 1 à 3 atomes de carbone, plus préférablement d'acide méthanesulfonique (CH₃-SO₃H);
mettre l'hydrolysat obtenu dans l'étape (a) en contact avec une résine échangeuse faible d'anions pour obtenir l'adsorption dudit au moins un acide alkylsulfonique dans ladite résine échangeuse faible d'anions et une solution aqueuse comprenant des sucres à 5 atomes de carbone (C5);
régénérer ladite résine échangeuse faible d'anions avec une solution aqueuse d'hydroxyde d'ammonium pour obtenir une solution aqueuse comprenant le sel d'ammonium dudit acide alkylsulfonique et des ions ammonium;
soumettre la solution aqueuse comprenant le sel d'ammonium dudit acide alkylsulfonique et des ions ammonium, obtenue dans l'étape (c), à une évaporation sous vide, pour obtenir une solution comprenant le sel d'ammonium dudit acide alkylsulfonique et des ions ammonium, lesdits ions ammonium étant présents en une quantité inférieure ou égale à 50%, de préférence comprise entre 10% et 20%, par rapport à la quantité totale d'ions ammonium présents dans la solution aqueuse obtenue dans l'étape (c);
mettre la solution contenant le sel d'ammonium dudit acide alkylsulfonique et des ions ammonium, obtenue dans l'étape (d), en contact avec une résine échangeuse forte de cations, pour obtenir une solution aqueuse concentrée dudit acide alkylsulfonique; recycler à l'étape (a) précitée la solution concentrée dudit acide alkylsulfonique obtenue dans ladite étape (e).

2. Procédé pour la récupération et le recyclage d'acide alkylsulfonique dans la production de lipides à partir de biomasse issue de plantes de guayule selon la revendication 1, dans lequel ledit hydrolysat comprenant des sucres à 5 atomes de carbone (C5) qui provient de biomasse issue de plantes de guayule est issu de l'hydrolyse d'hémicellulose contenue dans des plantes de guayule, lesdits sucres à 5 atomes de carbone (C5) étant présents dans ledit hydrolysat en une quantité supérieure ou égale à 50%, de préférence entre 75% et 84%, par rapport à la quantité totale de sucres présents dans ledit hydrolysat.

3. Procédé pour la récupération et le recyclage d'acide alkylsulfonique dans la production de lipides à partir de biomasse issue de plantes de guayule selon la revendication 1, dans lequel ledit hydrolysat comprenant des sucres à 5 atomes de carbone (C5) qui provient de biomasse issue de plantes de guayule est issu de l'hydrolyse d'hémicellulose contenue dans la bagasse issue de processus d'extraction subis par lesdites plantes de guayule, lesdits sucres à 5 atomes de carbone (C5) étant présents dans ledit hydrolysat en une quantité supérieure ou égale à 50%, de préférence comprise entre 75% et 95 %, par rapport à la quantité totale de sucres présents dans ledit hydrolysat.

4. Procédé pour la récupération et le recyclage d'acide alkylsulfonique dans la production de lipides à partir de biomasse issue de plantes de guayule selon l'une quelconque des revendications précédentes, dans lequel ladite résine échangeuse faible d'anions est choisie parmi les résines constituées d'un squelette polystyrène/divinylbenzène auquel sont attachés des groupes fonctionnels tels que des groupes amino tertiaires.

5. Procédé pour la récupération et le recyclage d'acide alkylsulfonique dans la production de lipides à partir de biomasse issue de plantes de guayule selon l'une quelconque des revendications précédentes, dans lequel l'hydrolysat dans ladite étape (b) est envoyé à une colonne contenant de la résine échangeuse faible d'anions à une température comprise entre 10°C et 60°C, de préférence entre 20°C et 40°C.

6. Procédé pour la récupération et le recyclage d'acide alkylsulfonique dans la production de lipides à partir de biomasse issue de plantes de guayule selon l'une quelconque des revendications précédentes, dans lequel la solution aqueuse d'hydroxyde d'ammonium dans ladite étape (c) a une teneur en hydroxyde d'ammonium comprise entre 1% en poids et 10% en poids, de préférence entre 2% en poids et 8% en poids, par rapport à la quantité totale de la solution.

7. Procédé pour la récupération et le recyclage d'acide alkylsulfonique dans la production de lipides à partir de biomasse issue de plantes de guayule selon l'une quelconque des revendications précédentes, dans lequel la solution aqueuse d'hydroxyde d'ammonium dans ladite étape (c) est envoyée à une colonne contenant de la résine échangeuse faible d'anions à une température comprise entre 10°C et 60°C, de préférence entre 20°C et 40°C.

8. Procédé pour la récupération et le recyclage d'acide alkylsulfonique dans la production de lipides à partir de biomasse issue de plantes de guayule selon l'une quelconque des revendications précédentes, dans lequel l'évaporation sous vide dans ladite étape (d) est effectuée:
- sous une pression comprise entre 30 mbars et 100 mbars, de préférence entre 40 mbars et 80 mbars; et/ou
- à une température comprise entre 10°C et 60°C, de préférence entre 20°C et 50°C.

9. Procédé pour la récupération et le recyclage d'acide alkylsulfonique dans la production de lipides à partir de biomasse issue de plantes de guayule selon l'une quelconque des revendications précédentes, dans lequel ladite résine échangeuse forte de cations est choisie parmi les résines constituées d'un squelette polystyrène/divinylbenzène auquel sont attachés des groupes fonctionnels tels que des groupes sulfonate.

10. Procédé pour la récupération et le recyclage d'acide alkylsulfonique dans la production de lipides à partir de biomasse issue de plantes de guayule selon l'une quelconque des revendications précédentes, dans lequel la solution contenant le sel d'ammonium dudit acide alkylsulfonique dans ladite étape (e) est envoyée à une colonne contenant la résine échangeuse forte de cations à une température comprise entre 10°C et 60°C, de préférence entre 20°C et 40°C.
